# EUROPEAN PATENT SPECIFICATION

(11) **EP 3 461 614 B1**
(45) Date of publication and mention of the grant of the patent: **12.05.2021**
(21) Application number: 17194026.5
(22) Date of filing: 29.09.2017
(51) Int. Cl.: B29C 48/50, B29C 48/25, B29C 48/285, B29C 48/40, B29B 7/60

(54) **EXTRUDER WITH FEEDING PORT**
EXTRUDER MIT EINFÜLLÖFFNUNG
EXTRUDEUSE AVEC ORIFICE D'ALIMENTATION

(43) Date of publication of application: 03.04.2019
(73) Proprietor: Baker Perkins Limited, Peterborough, Cambridgeshire PE4 7AP (GB)
(72) Inventor: YOUNG, Paul, Peterborough, Cambridgeshire PE4 7AP (GB); ILEY, Stephen Thomas, Peterborough, Cambridgeshire PE4 7AP (GB)
(74) Representative: Barker Brettell LLP

(56) References cited:
- EP-A2- 0 309 409
- WO-A1-2011/043523
- CH-A- 498 060
- US-A- 3 198 582
- US-A- 3 850 415
- US-A- 5 169 582
- US-A- 5 686 219
- US-A1- 2017 165 872

## Description

### Technical Field

The present invention relates to extruders, and in particular, to extruders comprising a twin-screw arrangement and capable of processing various materials.

### Background

In polymer production, the extrusion of polymer is a well-established part of the production process. Polymer in powder and / or granular form may be metered at a set rate into a dosing feeder. The polymer material falls under gravity from the dosing feeder through a feed port and into an extruder barrel in which there are driven rotatable screws. The screws are driven to rotate to cause the polymer material to be conveyed away from the feed port and along the barrel. Energy is imparted from the screws to the polymer material in the barrel. This causes the polymer to melt. The materials are melted and dispersed along the length of the barrel until exiting from the discharge end of the barrel.

For many years, various industries have struggled to adequately feed low bulk density materials into twin screw extruders. When top feeding formulations of a low density, air is introduced into the material before it enters the extruder barrel due to the drop in height between the dosing feeder and extruder barrel. The velocity of the particles causes them to bounce on the surface of the feed screws inhibiting entry into the screw flights.

As the material enters the extruder barrel and is consolidated within the ever tightening helix of the screws (along the axis of rotation), the air trapped within the barrel is forced back towards the feed port area, further introducing increased turbulence of the lighter elements of the feed material. This can cause the material to back up in the feed tube, eventually leading to total loss of throughput. The erratic nature of how the materials enter the barrel places undue variation of load on the drive train. As the main drive motor attempts to maintain a constant speed, the uneven load causes the torque to fluctuate.

US 5686219 discloses an extruder barrel inlet which comprises four rectilinear sides. WO2011/043523 discloses an extruder in which a barrel inlet comprises three vertical side walls and a fourth inclined side wall.

We seek to provide an improved extruder.

### Summary

According to the invention there is provided an extruder according to claim 1 comprising a feed port, the feed port is configured to direct material towards a barrel region of an extruder, the feed port comprising a passageway, the passageway arranged to be in communication with the barrel region of the extruder, and the passageway comprises a transverse cross-sectional shape which comprises three substantially rectilinear side surfaces which are arranged substantially orthogonally, and characterised in that the transverse cross-sectional shape extruder of the passageway comprises a fourth side surface which is non-orthogonally angled relative to two of the side surfaces which are adjacent to the fourth side surface.

Each of the side surfaces may be substantially linear in transverse cross-section. By 'transverse' we include generally transverse or lateral to the direction of extent of the feed port.

Each of the side surfaces is substantially smooth.

One of the side surfaces may be longer than an opposite side surface.

The side surfaces may be connected by junctions, which junctions are of curved or rounded or radiused transverse cross-sectional shape.

An angle of inclination of the fourth side relative to an adjacent side may be in the range 40 degrees to 80 degrees, 50 degrees to seventy degrees, 60 degrees to seventy degrees, 62 degrees to 68 degrees, 64 degrees to 66 degrees, or substantially 65 degrees.

The fourth side may be arranged to be orientated towards a direction of flow material in the barrel region (as brought about by the sense of rotation of screws of the extruder).

The barrel region may be formed in a barrel body.

The passageway of the feed port may have substantially constant/uniform dimensions or shape or aspect ratio for at least part of the extent of the passageway (in the direction of flow). The substantially constant shape or aspect ratio may be a finite or discrete length.

The passageway may have a cross-sectional shape which is substantially a trapezium in which (only) two side surfaces are substantially parallel. Taking into account inclusion of curved/rounded shape of the junctions, the shape of the outlet may be viewed as a modified trapezium. The junctions may be considered as junction regions.

The barrel region may comprise at least one bore of substantially uniform diameter. The barrel region may comprise two bores.

The extruder may comprise a transitional region which includes a widened or enlarged region which tapers to the diameter of the bore. Where the extruder comprises two bores the transition region tapers down to the diameter of each of the bores. The transition region may include one or more substantially (at least in part) conical surfaces. The transition region may be considered as having a volume which reduces in a generally downstream direction (towards the bores).

The transition region may be considered as part of the barrel region.

The bores may be substantially defined by shaped internal surfaces on two blocks, one block located on top of the other, and the blocks substantially form a barrel body.

The enlarged or widened transition region may be provided at least in an upper region, internal of the barrel body.

The extruder may comprise a block of material which is connected to an uppermost part of the barrel body, and the feed port may be defined by shaped surfaces formed in the block. Said block may be termed a barrel (body) casing/housing block.

The extruder may be a twin screw extruder.

The extruder may be a co-rotating extruder.

The extruder may be arranged configured or suitable for use with polymer material. By 'polymer material' we include materials having a molecular structure which includes chains or rings of linked repeating monomers. We also include thermosetting and thermoplastic materials, and more generally include plastics materials.

The extruder may comprise two bores, each bore containing a respective extruder screw.

The axes of rotation of the screws may be substantially parallel. Screws may be termed rotors, and may comprise helical blades or flights extending along the respective axis of rotation. The configuration of the flights may vary along the axial length of the screws. The screws may be said to have a variable geometry. For example, the screw geometry (such as pitch, helix angle and flight width, channel width, root, etc) may have certain characteristics present along one portion, and different characteristics along a different portion.

According to another aspect there is provided an extruder barrel assembly and a feed port to communicate with a barrel region, the barrel region defined internally of the barrel assembly, and the feed port comprises the feed port of the first aspect of the invention.

Another aspect relates to a barrel of an extruder in which an (upstream) feed region has an enlarged or widened volume, as compared to a (downstream) bore region.

According to yet a further aspect there is provided an extruder screw, for use as one of a twin-screw arrangement for an extruder, the screw comprising a feed portion and a work portion, the feed(er) portion arranged to convey material received through the feed port to the downstream work portion, and the work portion arranged to impart energy to the material, and the feed portion comprising a single helical formation, and the work portion comprising two helical formations.

The work portion may comprise at least one helical portion which is of substantially the same pitch as the helical portion of the feed portion. The work portion may comprise two helical portions of substantially the same pitch, which are offset from each other in an axial direction.

The helical portion of the feed portion may be arranged to transition into one of the helical portions of the work portion. This is preferably in a smooth and continuous manner.

The work portion may be arranged to impart energy to the material by way of compressive forces.

The work portion may be viewed as having a greater number of screw formations (per unit length) in comparison to the feed portion.

### Brief Description of the drawings

Various embodiments of the invention will now be described, by way of example only, with reference to the following drawings in which:

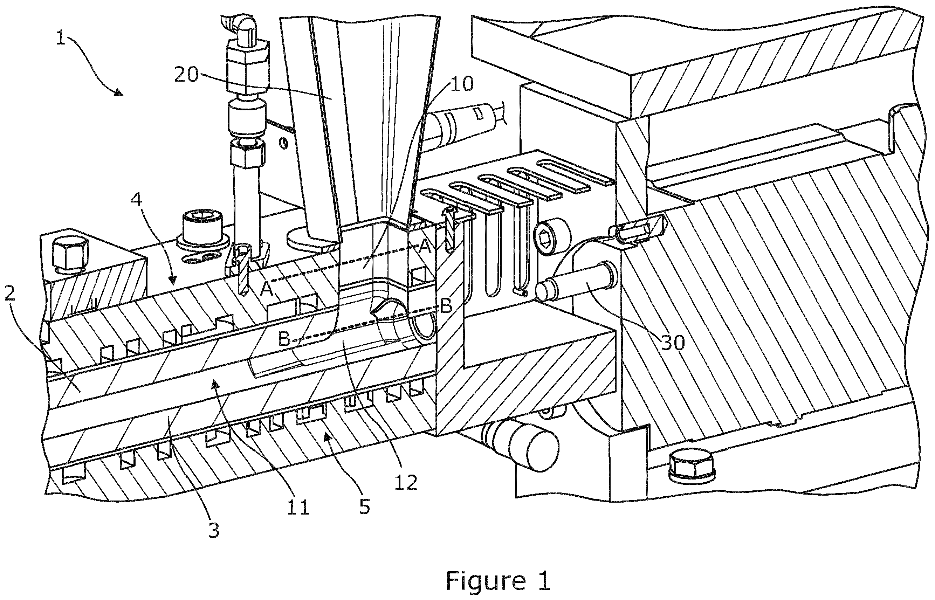

**Figure 1** is longitudinal cross-sectional view of an extruder,
**Figure 2** is a perspective view of an upper half of a barrel block,
**Figure 3** is a perspective view of a lower half of a barrel block,
**Figure 4** is a transverse section of a feed port,
**Figure 5** is a transverse section through an upper barrel block half, and

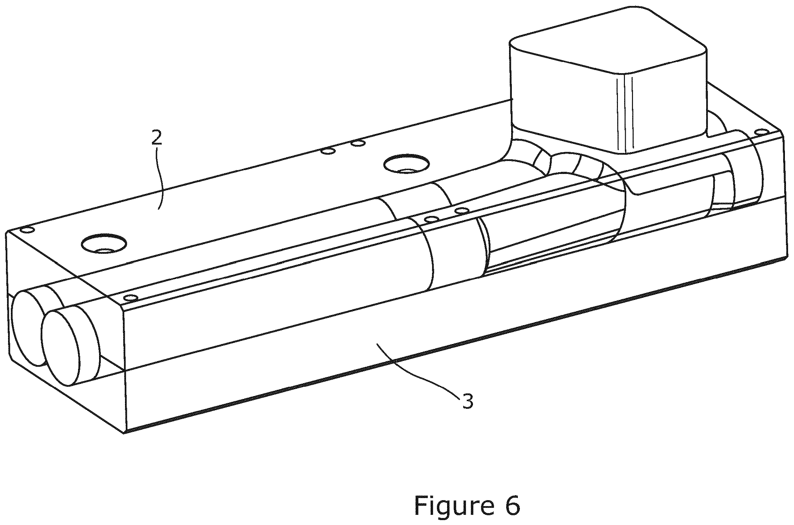

**Figure 6** is a perspective view of the volumetric envelope of material flow.

### Detailed Description

With reference to the figures there is now described a twin screw extruder 1, suitable for processing of polymer in powdered and/or granular form. As will be described in more detail below, the configuration of the feed port and the barrel region give rise to improved material intake and flow characteristics, which leads to improved operational performance of the extruder.

The extruder 1 comprises an upper barrel block 2 and a lower barrel block 3. The upper barrel block and the lower barrel block may collectively be referred to as a barrel (block) assembly. The upper barrel block 3 is shaped so as to be located on top of the lower barrel block. Each of the blocks comprises a respective shaped surface, and the shaped surface of each block is complementary to the other such that the two surfaces define an internal barrel region 11 when the two blocks are brought together. The surfaces defined by each block include two side-by-side constant diameter (overlapping) bore portions, each defining substantially one half of each bore. Both bores are of substantially the same diameter. The bores comprise substantially part-cylindrical (inwardly facing) surfaces.

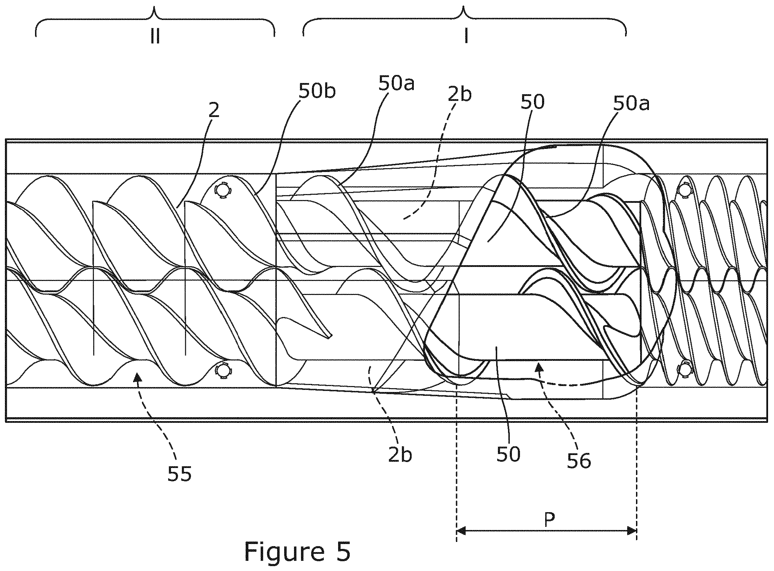

Each bore, accommodates a respective flighted screw 50 (as shown in Figure 5). Each screw is driven by a respective drive 30. Material is feed into a feed intake 10 by way of a feed chute 20. The lower part of the feed chute matches (is complementary to) the profile in the upper backing block. The upper part of the feed chute is formed to match that of the particular dosing feeder depending on the particular application for which the extruder is used.

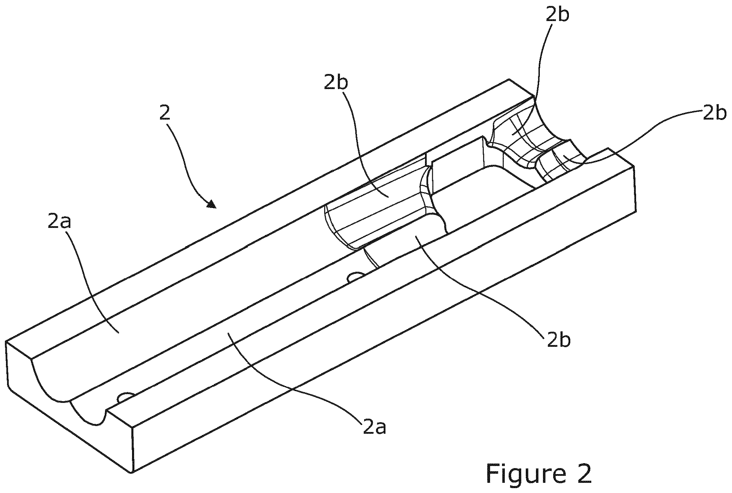

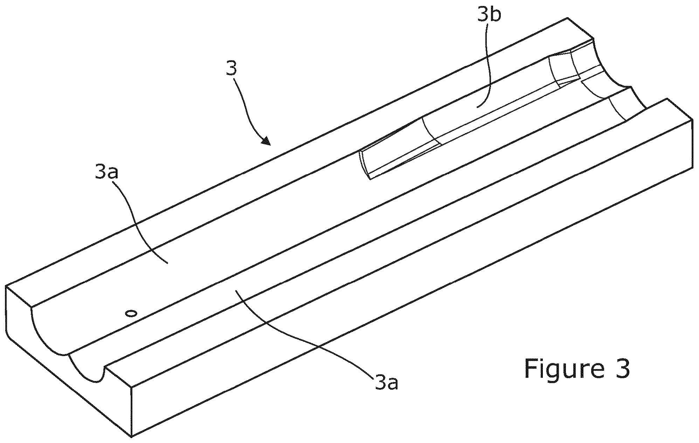

Each of the barrel blocks further defines surfaces for a transitional region 12, which is located upstream of the barrel portions, and towards a respective distal end region of each of the blocks. With reference to Figures 2 and 3, the surfaces 2b of the block 2 and surfaces 3b of the block 3, collectively define the transitional region. (The transition region may also be termed a feed region.)The surfaces 2b comprise substantially conical portions which taper in a downstream direction. The surfaces 3b, have a lesser extent than the surfaces 2b, but also comprise substantially conical surface portions. The transitional region communicates with the bores. The profiled (internal) surfaces which define the transitional region 12 may be termed a feed liner or barrel liner.

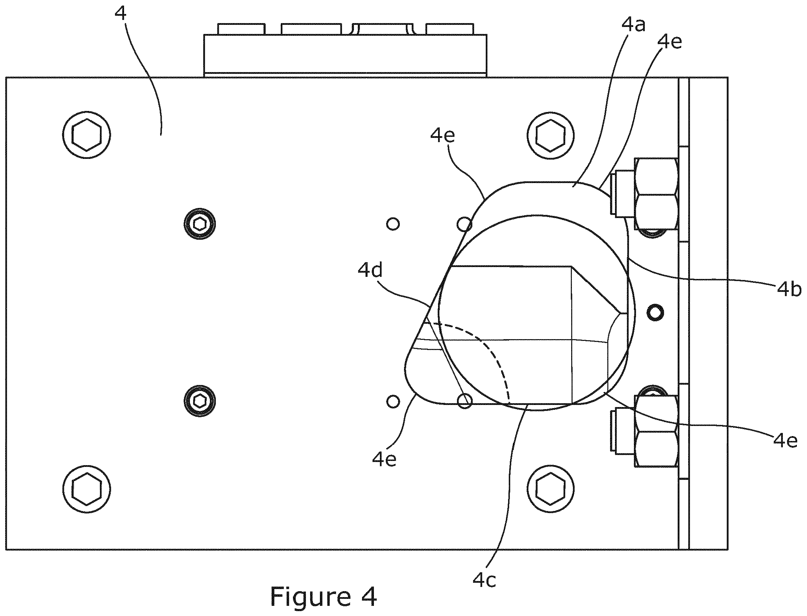

Reference is now made to Figure 4 which shows a plan view of the feed port 10, formed by a passageway in an upper barrel casing block 4 taken on section A-A. The feed port 10 has substantially constant shape and dimensions throughout the depth of the casing block 4. The transverse cross-sectional profile of the feed intake comprises a quasi or modified trapezium shape, which comprises side surfaces 4a, 4b, 4c and 4d. Each of the side surfaces is substantially rectilinear. The side surfaces 4a and 4c are substantially parallel, and the transverse extent or length of the side surface 4c is longer than that of the side surface 4a. Said side surfaces are connected by way of curved junctions 4e. The side 4a is arranged substantially orthogonal to the side 4, and the side 4b orthogonal to the side 4c. It may be noted that the extruder 1 also comprises a lower casing block 5, which is located underneath the lower barrel block 3.

The side surface 4d is configured at an incline or non-orthogonal angle to each of the adjacent side surfaces 4a and 4c. The side surface 4d is arranged at an angle ***a*** of substantially 65 degrees relative to the side surface 4c. The feed intake 10 extends through substantially the full depth of the casing block 4.

Reference is made to Figure 5 which shows the cross-section on B-B, through the upper barrel block 2, parallel with the direction of its length. This view shows the pathway provided for the material enlarges as it extends through the upper block, and develops into a modified shape (in comparison to that of the feed inlet portion which is formed in the upper casing 4. The enlarged region creates increased volume allowing more material to be present within the feed area, thereby increasing the potential throughput. The modified trapezium shape is angled towards the material flow effectively guiding the material into the twin bores. As can also be seen in Figure 5, the conical profile surfaces 2b are shown, tapering down towards the diameter of the bores. Also shown in Figure 5 are screws 50, which are shown as having a variable geometry along the axes of rotation.

Particular mention is now made of the screw geometry of the flighted screws 50, with reference to Figure 5. The screws are arranged in the barrel region as twin, self-wiping co-rotating screws. As will be described in more detail below, each screw has a variable screw geometry, along the respective axis of rotation of each screw. Two portions of each screw will be discussed, namely what will be termed a feed portion and a work portion, denoted (at least for schematic/explanatory purposes) by reference numerals I and II, respectively. The feed portion is arranged to convey material received through the feed port to the work portion. The work portion is downstream of the feed portion, and is arranged to impart an energy, through compression forces, to the material.

The feed portion of each screw 50 comprises a single helical flat fronted screw portion 50a. As can be seen in Figure 5, the screw portion 50a has relatively large pitch, (shown by the reference P), thus advantageously maximising available volume for the material as it is received in the barrel.

Progressing in a downstream, axial direction, the screw portion 50a continues, at substantially the same pitch. However, a second screw portion, referenced 50b, is introduced. The second screw portion 50b is offset from the screw portion 50a. The second screw portion 50b has a pitch which is substantially that of the first screw portion 50a. Both of the first screw portion 50a and the second screw portion 50b, in the work portion of the screw, have curved side walls as is evident from Figure 5. This therefore alters the channel profile 55, as compared to the channel profile 56 at the feed section of the screws. The channel volume in the work portion of the screws provides a reduced volume as compared to the channel volume in the feed portion of the screws. It is also to be noted that what may be termed 'the free volume', i.e. the (inner) volume of the barrel as defined by its internally facing walls, less the volume occupied by the screws, is greater in the feed region as compared to the work region, of the extruder.

It is to be noted that the extent, *in situ,* of feed portion of each screw 50 largely/substantially corresponds to, or is substantially located within, the extent of the enlarged transition volume of the barrel assembly. It is also to be noted that the work portion of each screw 50 (which comprise the two helical screw formations 50a and 50b) is substantially located with its respective bore.

The combination of the shape of the inlet port 10, the form of the barrel/feed liner in the transitional region 12, in particular advantageously dramatically reduce torque spikes, enabling the extruder to operate at higher rates of throughput. Our studies have shown how the profiled barrel liner and screws allow lighter materials, to fall towards the bottom of the feed area and into the screw flights rather than accumulate in the feed port. The special geometry of the screws within the feed area prevent materials bouncing off the surface of the screws and also allow more materials to fall into the screw flights at an increased rate.

Additional advantages of the extruder high intake feed system include:
increased profitability, resulting from increased throughput;
increased component reliability, resulting from reduced torque spikes which the components would otherwise be subjected to.

It will be appreciated that although particular mention has been made to the processing of polymer materials, and to low density/low bulk materials, the feed intake arrangement and/or the screw geometry may (either singularly or in combination) be beneficially used with both non-food materials and foodstuffs.

## Claims

1. An extruder (1) comprising a feed port (10), the feed port is configured to direct material towards a barrel region of an extruder, the feed port comprising a passageway, the passageway arranged to be in communication with the barrel region of the extruder, and the passageway comprises a transverse cross-sectional shape which comprises three substantially rectilinear side surfaces (4a; 4b; 4c) which are arranged substantially orthogonally, and **characterised in that** the transverse cross-sectional shape of the passageway comprises a fourth side surface (4d) which is non-orthogonally angled relative to two of the side surfaces which are adjacent to the fourth side surface.

2. An extruder as claimed in claim 1 in which each of the side surfaces (4a; 4b; 4c; 4d) is substantially linear in transverse cross-section.

3. An extruder as claimed in claim 1 or claim 2 in which one of the side surfaces (4a; 4b; 4c; 4d) is longer than an opposite side surface.

4. An extruder as claimed in any preceding claim in which the side surfaces are connected by junctions (4e), which junctions are of curved or rounded or radiused transverse cross-sectional shape.

5. An extruder as claimed in any preceding claim in which there is an angle of inclination of the fourth side surface (4d) relative to an adjacent side in the range 40 degrees to 70 degrees.

6. An extruder as claimed in any preceding claim in which the passageway of the feed port (10) has substantially constant/uniform dimensions or shape or aspect ratio for at least part of the extent of the passageway.

7. An extruder as claimed in any preceding claim in which the passageway may have a cross-sectional shape which is substantially a trapezium in which two side surfaces (4a; 4b; 4c) are substantially parallel.

8. An extruder as claimed in any preceding claim which comprises a transitional region which includes a widened or enlarged region which tapers to the diameter of the barrel.

9. An extruder as claimed in claim 8 in which the transitional region includes one or more substantially at least in part conical surfaces.

## Patentansprüche

1. Strangpresse (1), die eine Einfüllöffnung (10) umfasst, wobei die Einfüllöffnung dazu ausgelegt ist, Material zu einem Zylinderbereich einer Strangpresse zu leiten, wobei die Einfüllöffnung einen Durchgang umfasst, wobei der Durchgang dazu angeordnet ist, mit dem Zylinderbereich der Strangpresse verbunden zu sein, und der Durchgang eine Querschnittsform in Querrichtung umfasst, die drei im Wesentlichen geradlinige Seitenflächen (4a; 4b; 4c) umfasst, die im Wesentlichen rechtwinklig angeordnet sind, und **dadurch gekennzeichnet, dass** die Querschnittsform in Querrichtung des Durchgangs eine vierte Seitenfläche (4d) umfasst, die in Bezug zu zwei der Seitenflächen, die an die vierte Seitenfläche angrenzen, nicht rechtwinklig angewinkelt ist.

2. Strangpresse nach Anspruch 1, wobei jede der Seitenflächen (4a; 4b; 4c; 4d) im Querschnitt in Querrichtung im Wesentlichen linear ist.

3. Strangpresse nach Anspruch 1 oder Anspruch 2, wobei eine der Seitenflächen (4a; 4b; 4c; 4d) länger als eine entgegengesetzte Seitenfläche ist.

4. Strangpresse nach einem der vorstehenden Ansprüche, wobei die Seitenflächen durch Verbindungselemente (4e) miteinander verbunden sind, wobei die Verbindungselemente eine gekrümmte oder abgerundete oder rundliche Querschnittsform in Querrichtung aufweisen.

5. Strangpresse nach einem der vorstehenden Ansprüche, in der ein Neigungswinkel der vierten Seitenfläche (4d) in Bezug zu einer angrenzenden Seite im Bereich von 40 Grad bis 70 Grad vorhanden ist.

6. Strangpresse nach einem der vorstehenden Ansprüche, wobei der Durchgang der Einfüllöffnung (10) bezüglich der Abmessungen oder der Form oder des Seitenverhältnisses für zumindest einen Teil des Ausmaßes des Durchgangs im Wesentlichen konstant/gleichmäßig ist.

7. Strangpresse nach einem der vorstehenden Ansprüche, wobei der Durchgang eine Querschnittsform aufweisen kann, die im Wesentlichen trapezförmig ist, in der zwei Seitenflächen (4a; 4b; 4c) im Wesentlichen parallel sind.

8. Strangpresse nach einem der vorstehenden Ansprüche, die einen Übergangsbereich umfasst, der einen verbreiterten oder vergrößerten Bereich umfasst, der sich zum Durchmesser des Zylinders hin verjüngt.

9. Strangpresse nach Anspruch 8, wobei der Übergangsbereich eine oder mehrere im Wesentlichen zumindest zum Teil konische Flächen umfasst.

## Revendications

1. Extrudeuse (1), comprenant une ouverture d'alimentation (10), l'ouverture d'alimentation étant configurée pour diriger de la matière vers une région formant cylindre d'une extrudeuse, l'ouverture d'alimentation comprenant une voie de passage, la voie de passage étant agencée pour être en communication avec la région formant cylindre de l'extrudeuse et la voie de passage comprenant une forme en coupe transversale qui comprend trois surfaces latérales sensiblement rectilignes (4a ; 4b ; 4c) qui sont agencées sensiblement orthogonalement, et **caractérisée en ce que** la forme en coupe transversale de la voie de passage comprend une quatrième surface latérale (4d) qui est inclinée de façon non orthogonale par rapport à deux des surfaces latérales qui sont adjacentes à la quatrième surface latérale.

2. Extrudeuse selon la revendication 1, dans laquelle chacune des surfaces latérales (4a ; 4b ; 4c ; 4d) est sensiblement linéaire en coupe transversale.

3. Extrudeuse selon la revendication 1 ou la revendication 2, dans laquelle l'une des surfaces latérales (4a ; 4b ; 4c ; 4d) est plus longue qu'une surface latérale opposée.

4. Extrudeuse selon l'une quelconque des revendications précédentes, dans laquelle les surfaces latérales sont reliées par des jonctions (4e), lesquelles jonctions présentent une forme en coupe transversale courbe ou arrondie ou ronde.

5. Extrudeuse selon l'une quelconque des revendications précédentes, dans laquelle un angle d'inclinaison compris entre 40 degrés et 70 degrés est formé entre la quatrième surface latérale (4d) et un côté adjacent.

6. Extrudeuse selon l'une quelconque des revendications précédentes, dans laquelle la voie de passage de l'ouverture d'alimentation (10) présente des dimensions ou une forme ou un rapport de forme sensiblement constants/uniformes pour au moins une partie de l'étendue de la voie de passage.

7. Extrudeuse selon l'une quelconque des revendications précédentes, dans laquelle la voie de passage peut présenter une forme en coupe transversale qui consiste sensiblement en un trapèze dans lequel deux surfaces latérales (4a ; 4b ; 4c) sont sensiblement parallèles.

8. Extrudeuse selon l'une quelconque des revendications précédentes, comprenant une région de transition comportant une région élargie ou agrandie qui se rétrécit progressivement jusqu'au diamètre du cylindre.

9. Extrudeuse selon la revendication 8, dans laquelle la région de transition comporte une ou plusieurs surfaces sensiblement au moins en partie coniques.
